(19) Europäisches Patentamt
European Patent Office
Office européen des brevets

(11) Veröffentlichungsnummer: **0 104 530**
**A2**

(12) **EUROPÄISCHE PATENTANMELDUNG**

(21) Anmeldenummer: **83108980.0**

(22) Anmeldetag: **12.09.83**

(51) Int. Cl.³: **C 09 B 57/12**
**C 09 B 67/00, C 09 B 3/82**

(30) Priorität: **25.09.82 DE 3235572**

(43) Veröffentlichungstag der Anmeldung: **04.04.84 Patentblatt 84/14**

(84) Benannte Vertragsstaaten: **CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Herzog, Helmut, Dr.**
**Am Benthal 22**
**D-5090 Leverkusen 31(DE)**

(72) Erfinder: **Wunderlich, Klaus, Dr.**
**Carl-Rumpff-Strasse 21**
**D-5090 Leverkusen 1(DE)**

(72) Erfinder: **Hohmann, Walter, Dr.**
**Fontanestrasse 17**
**D-5090 Leverkusen 1(DE)**

(54) **Küpenfarbstoffgemische.**

(57) Küpenfarbstoffgemische, die dadurch erhältlich sind, daß man gegebenenfalls im Naphthalinring substituierte 1,4,5,8-Naphthalintetracarbonsäure oder deren Dianhydrid mit 2,3-Diaminotoluol oder einem Gemisch aus 2,3- und 3,4-Diaminotoluol bei erhöhter Temperatur umsetzt, sowie ein Verfahren zur Herstellung eines Küpenfarbstoffgemischs, das dadurch gekennzeichnet ist, daß man gegebenenfalls im Naphthalinring substituierte 1,4,5,8-Naphthalintetracarbonsäure oder deren Dianhydrid mit einem Diamin der Formel

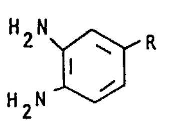 , 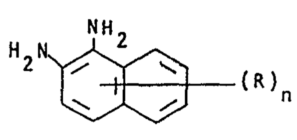 , 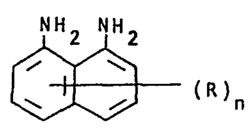 ,

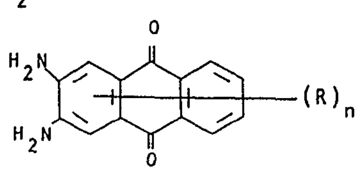 oder 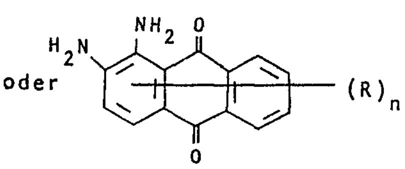 ,

wobei

R und n die in der Beschreibung angegebenen Bedeutungen besitzen.

in Phenol bei erhöhter Temperatur umsetzt.

EP 0 104 530 A2

BAYER AKTIENGESELLSCHAFT    5090 Leverkusen, Bayerwerk

Zentralbereich
Patente, Marken und Lizenzen    PG/Mt-c

## Küpenfarbstoffgemische

Die Erfindung betrifft Gemische von Küpenfarbstoffen, Verfahren zu ihrer Herstellung sowie ihre Verwendung.

Die erfindungsgemäßen Küpenfarbstoffgemische sind dadurch erhältlich, daß man gegebenenfalls im Naphthalinring substituierte 1,4,5,8-Naphthalintetracarbonsäure oder deren Dianhydrid mit 2,3-Diaminotoluol oder einem Gemisch aus 2,3- und 3,4-Diaminotoluol, vorzugsweise in Gegenwart eines Verdünnungsmittels, bei erhöhter Temperatur umsetzt.

Die so erhältlichen Gemische enthalten Farbstoffe der Formeln

I 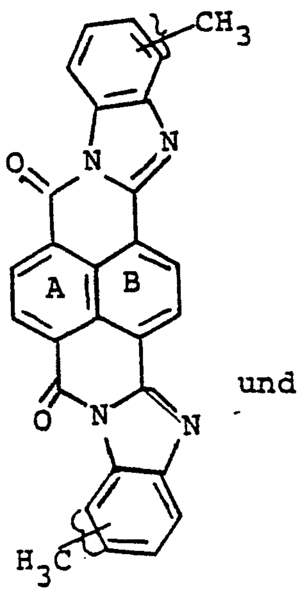 und 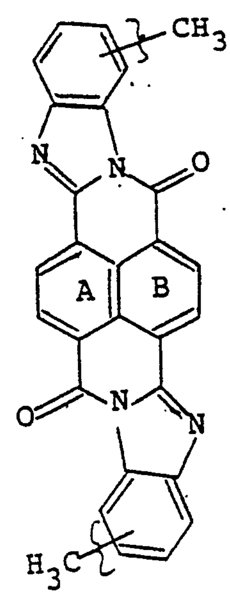 II

wobei die mit A und B bezeichneten Ringe substituiert sein können.

Bei Einsatz von 2,3-Diaminotoluol als einziges Amin in die obige Reaktion resultieren Küpenfarbstoffgemische, die Farbstoffe der Formeln

III 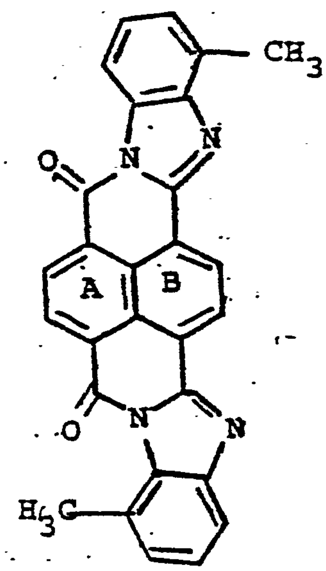 und 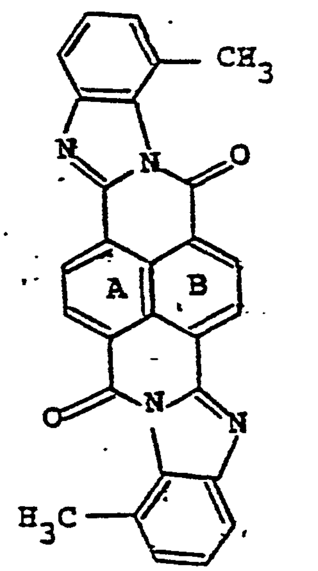 IV

enthalten.

Weiterhin betrifft die Erfindung ein Verfahren zur Herstellung eines Küpenfarbstoffgemischs, das dadurch gekennzeichnet ist, daß man gegebenenfalls im Naphthalinring substituierte 1,4,5,8-Naphthalintetracarbonsäure oder deren Dianhydrid mit einem Diamin der Formel

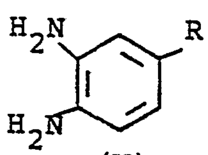 ,

(V)

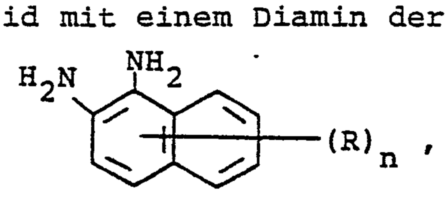 ,

(VI)

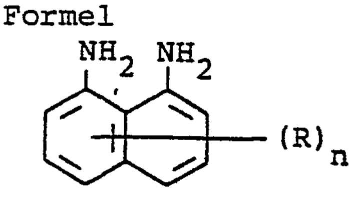 ,

(VII)

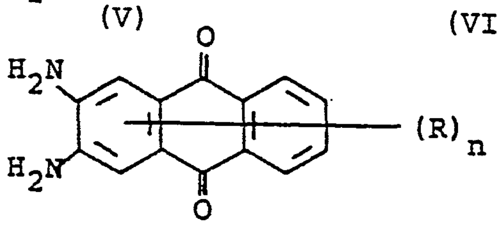 oder

(VIII)

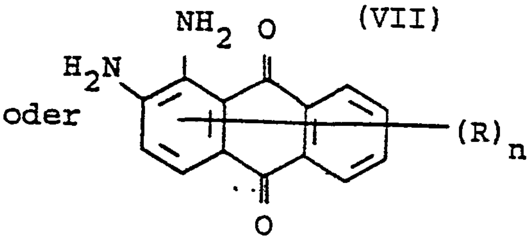 ,

(IX)

wobei

R H, -OH, $C_1$-$C_4$-Alkyl, $C_1$-$C_4$-Alkoxy, Phenoxy, Halogen, insbesondere Cl und Br, $-NO_2$, -CN, Acylamino, insbesondere $C_1$-$C_4$-Alkylcarbonylamino, $C_1$-$C_4$-Alkylsulfonylamino und Benzoylamino und

n 1, 2 oder 3 bezeichnen,

in Phenol bei erhöhter Temperatur umsetzt.

Die Herstellung von Naphthoylenbisimidazolen aus 1,4,5,8-Naphthalintetracarbonsäure(anhydrid) und 1,2-Diaminobenzol wird in der DE-PS 430 632 beschrieben. Die Reaktionskomponenten werden entweder ohne Lösungsmittel zusammengeschmolzen oder in einem hochsiedenden Lösungsmittel, z.B. Nitrobenzol, erhitzt.

Als weitere Lösungsmittel für diese Kondensationsreaktion werden in der Literatur genannt:
Eisessig (Fiat Final Report 1313 II, 168; J. Arient, Russ. chem. Reviews (Übersetzung) 1965, Nr. 11, S. 827); verdünnte $H_2SO_4$ (DE-OS 1 569 740) und verdünnte $H_2SO_4$ in Gegenwart oberflächenaktiver Mittel (RA 182 822/823).

Literaturbekannt ist ebenfalls die Reaktion von Naphthalintetracarbonsäure(anhydrid) mit 4-Methyl-1,2-diaminobenzol. Gemäß der GB-PS 1 237 838 (DE-OS 1 569 736) führt man die Umsetzung unter Druck in einem $C_1$-$C_6$-Alkohol in Gegenwart von Essigsäure bei 120-180°C durch. Nach Collect. czechoslov. chem. Commun. 30 (1965), Nr. 11, S. 3718-3729 wird siedender Eisessig als Lösungsmittel verwendet.

Die Kondensation von Naphthalintetracarbonsäure(anhydrid) mit 3-Nitro-4-aminotoluol in Gegenwart von Eisen als Reduktionsmittel in Essigsäure gemäß JP 5 224 225, Beispiel 3 führt zu einem Naphthoylendibenzimidazol (cis-trans-Gemisch), das identisch ist mit einem aus 4-Methyl-1,2-diaminobenzol hergestellten Farbstoff.

Überraschenderweise fanden wir nun, daß durch Reaktion von gegebenenfalls im Naphthalinring substituierter 1,4,5,8-Naphthalintetracarbonsäure oder deren Dianhydrid mit 2,3-Diaminotoluol oder einem Gemisch aus 2,3- und 3,4-Diaminotoluol, vorzugsweise in Gegenwart eines inerten Verdünnungsmittels, bei erhöhter Temperatur, scharlachrote Küpenfarbstoffe erhalten werden, die erheblich farbstärker sind als die bekannten Farbstoffe auf Basis 3,4-Diaminotoluol.

Die in die Umsetzungen eingesetzte 1,4,5,8-Naphthalintetracarbonsäure oder deren Anhydrid können z.B. durch Chlor oder $C_1$-$C_4$-Alkyl, insbesondere Methyl, substituiert sein.

Vorzugsweise werden jedoch die unsubstituierten Verbindungen eingesetzt.

Das eingesetzte 2,3-Diaminotoluol kann nach literaturbekannten Verfahren, z.B. aus 3-Nitro-2-amino-toluol durch Reduktion hergestellt werden.

Bei dem eingesetzten 2,3-/3,4-Diaminotoluol-Gemisch handelt es sich vorzugsweise um ein technisches Gemisch wie es bei der Toluylendiamin-Produktion anfällt.

Das eingesetzte 2,3-/3,4-Diamingemisch enthält vorzugsweise 30 - 70 Gew.-%, besonders bevorzugt 45 - 55 Gew.-% 2,3-Diaminotoluol sowie 70 - 30 Gew.-%, besonders bevorzugt 55 - 45 Gew.-% 3,4-Diaminotoluol.

Ganz bevorzugt eingesetzt wird ein Gemisch, das ca. 50 Gew.-% 2,3-Diaminotoluol und ca. 50 Gew.-% 3,4-Diaminotoluol enthält.

Als Beispiele für Diamine der Formeln V-IX seien genannt: 4-Methyl-1,2-diaminobenzol, 4-Ethoxy-1,2-diaminobenzol, 4-Chlor-1,2-diaminobenzol, 4-Cyan-1,2-diaminobenzol, 1,2-Diaminonaphthalin, 1,8-Diaminonaphthalin, 1,2-Diaminoanthrachinon, 2,3-Diaminoanthrachinon, bevorzugt eingesetzt wird o-Phenylendiamin.

Die zur Herstellung der erfindungsgemäßen Küpenfarbstoffgemische benötigte Menge an Diamin oder -Gemisch beträgt etwa 2 bis etwa 2,5 Mol, vorzugsweise 2 bis 2,1 Mol, pro Mol Naphthalintetracarbonsäure(anhydrid).

Prinzipiell kann das erfindungsgemäße Verfahren zur Herstellung von Küpenfarbstoffgemischen aus gegebenenfalls im Naphthalinring substituierter 1,4,5,8-Naphthalintetracarbonsäure oder deren Dianhydrid und 2,3-Diaminotoluol oder einem Gemisch aus 2,3- und 3,4-Diaminotoluol auch ohne Verdünnungsmittel in der Backschmelze durchgeführt werden; vorzugsweise arbeitet man jedoch in Gegenwart eines Verdünnungsmittels.

Geeignete Verdünnungsmittel sind z.B. Wasser und organische Lösungsmittel wie Eisessig, Nitrobenzol und besonders

bevorzugt Phenol. Auch andere organische Lösungsmittel können eingesetzt werden.

Die Umsetzung von gegebenenfalls substituierter 1,4,5,8-Naphthalintetracarbonsäure oder deren Dianhydrid mit den Diaminen der Formeln V-IX erfolgt erfindungsgemäß in Phenol.

Die Arbeitsweisen in Phenol bieten zahlreiche Vorteile. So kann zum einen sehr gute Farbausbeute erzielt werden. Weiterhin wird es möglich, die einzusetzende Aminmenge gering zu halten; dadurch ergeben sich wesentliche Vereinfachungen bei der Aufarbeitung der Produkte.

Die Menge an Verdünnungsmittel kann innerhalb eines größeren Intervalls schwanken. Im allgemeinen arbeitet man mit etwa 2 bis etwa 7 Gewichtsteilen, vorzugsweise 4 bis 6 Gewichtsteilen Verdünnungsmittel pro Gewichtsteil Naphthalintetracarbonsäure(anhydrid).

Auch die Reaktionstemperatur kann in weiten Grenzen schwanken. Im allgemeinen arbeitet man zwischen etwa 60 und etwa 185° C, vorzugsweise bei 130 bis 170° C. Es empfiehlt sich in einigen Fällen, das Reaktionswasser laufend abzudestillieren.

Die Reaktionsdauer hängt von verschiedenen Parametern ab und liegt im allgemeinen zwischen etwa 2 und etwa 12 Stunden. Das Ende der Reaktion läßt lich leicht durch Dünnschichtchromatographie von Proben, die von Zeit zu Zeit dem Reaktionsgemisch entnommen werden, ermitteln.

Nach Beendigung der Reaktion wird der Ansatz in üblicher Weise aufgearbeitet. Dazu kann man z.B. unter vermindertem Druck zur Trockne eindampfen. Auf diese Weise läßt sich das eingesetzte Verdünnungsmittel - z.B. Phenol zu 90-95 % - wiedergewinnen und kann gegebenenfalls ohne weitere Reinigung in einen neuen Ansatz eingesetzt werden.

Großtechnisch können die Verfahren zur Herstellung von Küpenfarbstoffgemischen auch als kostengünstige Kessel-Schaufeltrockner-Verfahren praktiziert werden. Dabei fallen die Farbstoffgemische trocken und gemahlen an. Sie können direkt, ohne weitere Reinigung formiert werden.

Überraschenderweise sind die erfindungsgemäß erhältlichen Küpenfarbstoffe erheblich farbstärker als die bekannten Farbstoffe auf Basis 3,4-Diaminotoluol. Die neuen Farbstoffe färben Baumwolle aus der Dithionitküpe scharlachrot. Die Färbungen zeichnen sich durch gute Wasch- und Lichtechtheit aus.

Bedeutsam ist weiterhin, daß sich die neuen Farbstoffe sehr ökonomisch herstellen lassen; insbesondere bei Verwendung von Phenol als Verdünnungsmittel sowie bei Einsatz des technischen o-Diamingemischs.

Beispiel 1

In einem 1 l-Planschliffbecher mit Ankerrührer, Destillationsbrücke mit Vorlage und Innenthermometer wird ein Gemisch aus 633 g (≙ 600 ml) flüssigem Phenol, 120 g 1,4,5,8-Napthalintetracarbonsäure (98 %ig; gemahlen) und 92,7 g eines technischen o-Diaminogemischs (98 %ig; bestehend aus ca. 50 Gew.-% 2,3- und ca. 50 Gew.-% 3,4-Diaminotoluol) innerhalb 4 h von 60 auf 165° C erhitzt, wobei ca. 35 ml Reaktionswasser abdestilliert werden. Anschließend erwärmt man so lange auf 165 - 170° C, bis eine dem Reaktionsgemisch entnommene Probe dünnschichtchromatographisch keine Tetracarbonsäure mehr und $\leq 2$ % der halbseitig umgesetzten Dicarbonsäure enthält (Dauer ca. 1-4 h; gegebenenfalls Nachsatz von o-Diamingemisch).

Der Reaktionsansatz wird dann auf 100 - 120° C abgekühlt, die Schmelze auf ein Emailblech gegossen und bei 140 - 150° C im Vakuum getrocknet.

Erhalten werden 186,7 g eines Rohfarbstoffs, der weniger als 0,1 % an Phenol und Diaminotoluolen enthält.

Der in üblicher Weise formierte Rohfarbstoff ergibt auf Baumwolle ein farbstarkes Scharlach mit guter Licht- und Waschechtheit.

Beispiel 2

Ein Gemisch aus 105,5 g flüssigem Phenol, 16 g 1,4,5,8-Naphthalintetracarbonsäure (99 %ig) und 15 g 2,3-Diaminotoluol (90-91 %ig) wird in einem 250 ml-Planschliffbecher innerhalb 2 h von 60 auf 165° C erwärmt und 2 h unter gutem Rühren bei 165 - 170° C gehalten. Nach Dünnschichtchromatographie sind keine Tetrasäure mehr und < 2 % an halbseitig umgesetzter Dicarbonsäure vorhanden.

Nach der Aufarbeitung analog zu Beispiel 1 resultieren 25,6 g eines Farbstoffs, der Baumwolle nach üblichen Färbeverfahren im Scharlachton anfärbt.

Beispiel 3

Eine Mischung aus 105,5 g flüssigem Phenol, 20 g 1,4,5,8-Naphthalintetracarbonsäure (98-100 %ig) und 15 g o-Phenylendiamin wird in einem 250 ml-Planschliffbecher innerhalb von 1 h von 70 auf 165°C erhitzt und 2 h unter gutem Rühren bei 165-170°C gehalten, wobei das entstehende Reaktionswasser laufend abdestilliert wird.

Nach Dünnschichtchromatogramm sind keine Tetrasäure mehr und < 2 % halbseitig umgesetzter Dicarbonsäure vorhanden.

Arbeitet man gemäß Beispiel 1 auf, so erhält man 28,6 g eines cis-trans-Farbstoffgemischs, das Baumwolle nach üblichen Färbeverfahren in einem klaren Scharlachton anfärbt.

Beispiele 4-11

Arbeitet man gemäß Beispiel 3, ersetzt aber o-Phenylendiamin durch eine entsprechende Menge der in der folgenden Tabelle genannten Diamine, so erhält man die entsprechenden Küpenfarbstoffe in ebenfalls guten Ausbeuten.

Tabelle

| Bsp.-Nr. | Diamin | Nuance des Küpenfarbstoffs auf Baumwolle |
|---|---|---|
| 4 | 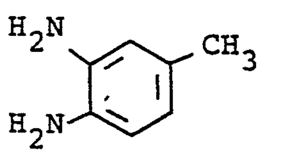 | rotscharlach |
| 5 | 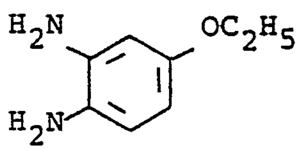 | braun |
| 6 | 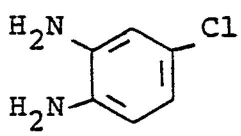 | braun |
| 7 | 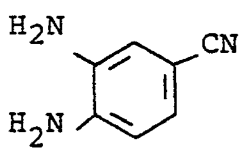 | orange |
| 8 | 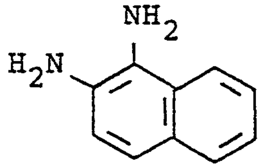 | grauviolett |

<u>Tabelle</u> (Fortsetzung)

| Bsp.-Nr. | Diamin | Nuance des Küpenfarbstoffs auf Baumwolle |
|---|---|---|
| 9 | 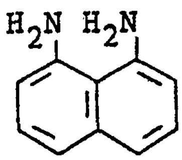 | graubraun |
| 10 | 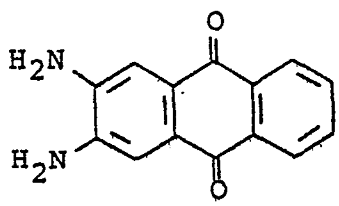 | gelbbraun |
| 11 | 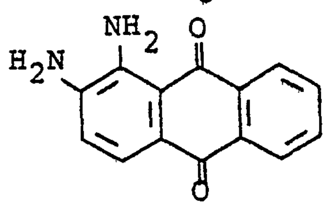 | gelbbraun |

Patentansprüche:

1. Küpenfarbstoffgemische, die dadurch erhältlich sind, daß man gegebenenfalls im Napthtalinring substituierte 1,4,5,8-Naphthalintetracarbonsäure oder deren Dianhydrid mit 2,3- Diaminotoluol oder einem Gemisch aus 2,3- und 3,4-Diaminotoluol vorzugsweise in Gegenwart eines Verdünnungsmittels, bei erhöhter Temperatur umsetzt.

2. Küpenfarbstoffgemische gemäß Anspruch 1, die Farbstoffe der Formeln

I 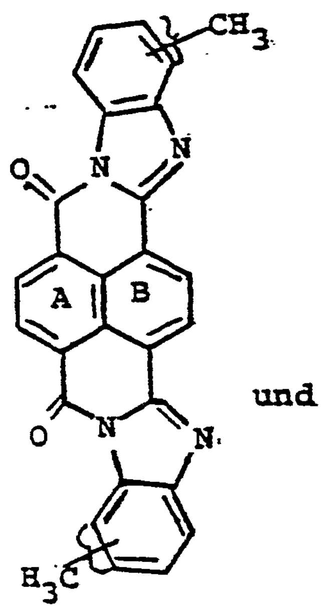 und 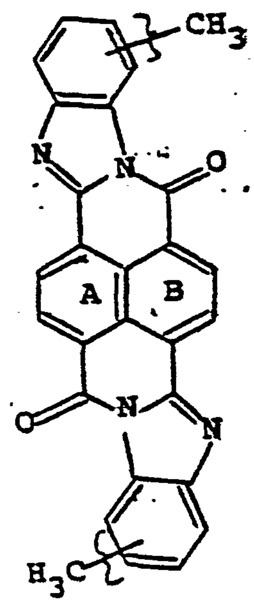 II

wobei die mit A und B bezeichneten Ringe substituiert sein können, enthalten.

3. Küpenfarbstoffgemische gemäß Anspruch 1, die Farbstoffe der Formeln

III 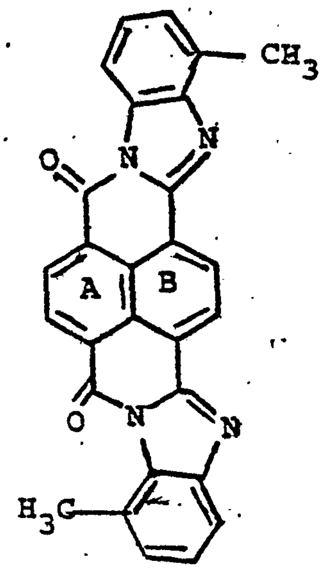 und 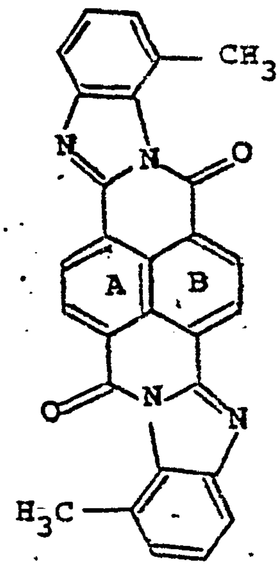 IV

wobei die mit A und B bezeichneten Ringe substituiert sein können, enthalten.

4. Küpenfarbstoffgemische gemäß den Ansprüchen 1 - 2, dadurch erhältlich, daß man ein 2,3-/3,4-Diaminotoluolgemisch einsetzt, das 30 - 70 Gew.-% 2,3-Diaminotoluol und 70 - 30 Gew.% 3,4-Diaminotoluol enthält.

5. Küpenfarbstoffe gemäß den Ansprüchen 1 - 2, dadurch erhältlich, daß man ein 2,3-/3,4-Diaminotoluolgemisch einsetzt, das 45 - 55 Gew.-%, insbesondere ca. 50 Gew.-% 2,3-Diaminotoluol und 55 - 45 Gew.-%, insbesondere ca. 50 Gew.-% 3,4-Diaminotoluol enthält.

6. Küpenfarbstoffe gemäß den Ansprüchen 1-5, dadurch erhältlich, daß man in Gegenwart von Phenol als Verdünnungsmittel arbeitet.

7. Verfahren zur Herstellung eines Küpenfarbstoffgemischs, dadurch gekennzeichnet, daß man gegebenenfalls im Naphthalinring substituierte 1,4,5,8-Naphthalintetracarbonsäure oder deren Dianhydrid mit einem Diamin der Formel

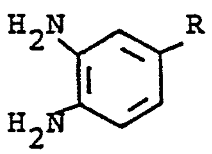 , 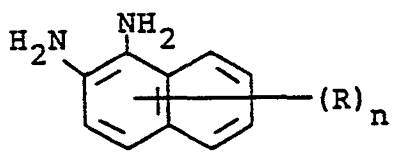 , 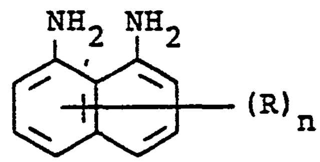 ,

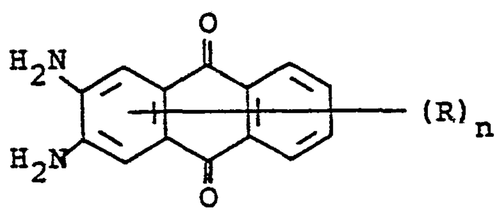 oder 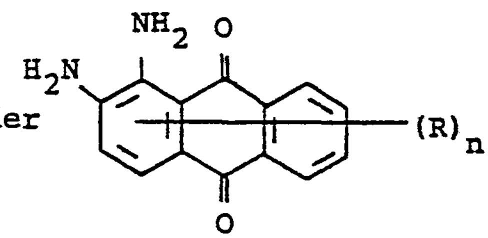 ,

wobei

R H, -OH, $C_1$-$C_4$-Alkyl, $C_1$-$C_4$-Alkoxy, Phenoxy, Halogen, insbesondere Cl und Br, $-NO_2$, -CN, Acylamino, insbesondere $C_1$-$C_4$-Alkylcarbonylamino, $C_1$-$C_4$-Alkylsulfonylamino und Benzoylamino und

n 1, 2 oder 3 bezeichnen,

in Phenol bei erhöhter Temperatur umsetzt.

8. Verfahren gemäß den Ansprüchen 1-7, dadurch gekennzeichnet, daß man etwa 2 bis etwa 2,5 Mol, insbesondere 2 bis 2,1 Mol, an o-Diamin oder -gemisch pro

Mol Naphthalintetracarbonsäure(anhydrid) einsetzt.

9. Verfahren gemäß den Ansprüchen 1-8, dadurch gekennzeichnet, daß man in Gegenwart von etwa 2 bis etwa 7 Gewichtsteilen, vorzugsweise 4 bis 6 Gewichtsteilen Verdünnungsmittel, pro Mol Naphthalintetracarbonsäure (anhydrid) arbeitet.

10. Verfahren gemäß den Ansprüchen 1-9, dadurch gekennzeichnet, daß man bei etwa 60 bis etwa 185°C, vorzugsweise bei 130 bis 170°C arbeitet.